# EUROPÄISCHE PATENTSCHRIFT

(11) **EP 2 130 706 B1**
(45) Veröffentlichungstag und Bekanntmachung des Hinweises auf die Patenterteilung: **09.07.2014**
(21) Anmeldenummer: 09006126.8
(22) Anmeldetag: 05.05.2009
(51) Int. Cl.: B60J 7/02, B60J 7/043

(54) **Kulisseneinrichtung eines verstellbaren Deckels eines Fahrzeugdaches**
Link device of an adjustable cover of a vehicle roof
Dispositif à coulisses d'un couvercle réglable d'un toit de véhicule

(30) Priorität: 03.06.2008 DE 102008026490
(43) Veröffentlichungstag der Anmeldung: 09.12.2009
(73) Patentinhaber: Webasto SE, 82131 Stockdorf (DE)
(72) Erfinder: Wingen, Bernhard, 83620 Feldkirchen (DE); Wimmer, Rudolf, 82110 Germering (DE); Pollak, Martin, 82178 Puchheim (DE); Birndorfer, Robert, 82362 Weilheim (DE)
(74) Vertreter: Konnerth, Dieter Hans

(56) Entgegenhaltungen:
- EP-A2- 1 164 042
- EP-A2- 1 535 780
- WO-A1-00/35705
- DE-A1- 10 011 747
- DE-A1- 10 158 174
- US-A1- 2002 158 491
- US-A1- 2007 001 476

## Beschreibung

Die Erfindung betrifft eine Kulisseneinrichtung eines verstellbaren Deckels eines öffnungsfähigen Fahrzeugdaches, die an der Unterseite des Deckels fest anbringbar ist und zumindest eine Kulissenbahn zum Eingriff eines die Stellung des Deckels steuernden Steuerteils aufweist.

Aus der DE 100 11 747 A1 ist eine Kulisseneinrichtung zur festen Anbringung an der Unterseite eines Deckels eines öffnungsfähigen Fahrzeugdaches bekannt geworden. Die Kulisseneinrichtung besteht aus einem vorderen und einem hinteren Kulissenelement, die in längsverstellbarer Weise und dabei stufenlos oder gestuft fest miteinander verbindbar sind. Das vordere Kulissenelement weist eine Lagerung wie z. B. einen Gleitbacken zum Eingriff an einer dachfesten Führungsbahn und damit zur Lagerung des Deckels auf, während das hintere Kulissenelement eine Kulissenbahn zum Eingriff eines Verstellhebels aufweist. Die beiden Kulissenelemente können z. B. als Blechteile, als kunststoffumspritzte Blechteile oder als Druckgussteile gebildet sein und sie sind miteinander verschraubt, vernietet verpunktet oder vertoxt.

Kulissenelemente und Kulissenbahnen an Deckeln sind grundsätzlich in unterschiedlichen Gestaltungen bekannt wie z. B. eine einseitig offene Kulissenbahn, zwei offene Kulissenbahnen, T-Führungen oder Schlitzführungen wie in der DE 100 11 747 A1. Um einen an der Kulissenbahn geführten Gleiter gegen Herausziehen aus der Kulissenbahn in Y-Richtung oder Querrichtung zu sichern, können Umgreifungen der Führungen oder Bahnen vorgesehen sein.

Aus der WO 00/35705 A1 ist eine eingangs genannte Kulisseneinrichtung eines verstellbaren Deckels eines öffnungsfähigen Fahrzeugdaches bekannt geworden, die an der Unterseite des Deckels fest anbringbar ist und zumindest eine Kulissenbahn zum Eingriff eines die Stellung des Deckels steuernden Steuerteils aufweist. Die Kulissenbahn ist aus einem Profil gebildet, das einen einseitig offenen Querschnitt mit einem Längsschlitz und eine obere Umbiegung und eine untere Umbiegung als Begrenzung des Längsschlitzes aufweist.

Des weiteren ist aus der EP 1 535 780 A2 ist eine eingangs genannte Kulisseneinrichtung eines verstellbaren Deckels eines öffnungsfähigen Fahrzeugdaches bekannt geworden. Die Kulisseneinrichtung weist ein an der Unterseite des Deckels fest angebrachtes Kulissenteil mit einer Kulissenbahn auf, in der ein Steuerteil zum Ausstellen des Deckels verschiebbar aufgenommen ist. Über einen vorderen Arm der Kulisseneinrichtung ist der Deckel schwenkbar gelagert.

Aus der EP 1 164 042 A2 ist ein Cabriolet-Fahrzeug mit einem Faltverdeck bekannt geworden, das über ein Verdeckgestell am Fahrzeug bewegbar gelagert ist. Eine Heckscheibe des Faltverdecks ist mittels eines Rahmens, der ein Teil des Verdeckgestells bildet, am Verdeckgestell angebracht. Der Rahmen kann beispielsweise aus Rollprofilen gebildet sein.

Der Erfindung liegt die Aufgabe zugrunde, eine eingangs genannte Kulisseneinrichtung kostengünstig herstellbar und mit verbesserter Funktionalität zu gestalten.

Die Aufgabe wird erfindungsgemäß durch eine Kulisseneinrichtung mit den Merkmalen des Anspruchs 1 gelöst.

Vorteilhafte Ausgestaltungen der Erfindung sind in den abhängigen Ansprüchen angegeben.

Bei der erfindungsgemäßen Kulisseneinrichtung wird dadurch, dass zumindest ein die Kulissenbahn enthaltender Abschnitt der Kulisseneinrichtung aus einem Rollprofil gebildet ist, eine in einem kostengünstigen Herstellungsverfahren erzeugbare Kulissenbahn bereitgestellt, die auch in Längsrichtung einfach verformbar ist und die insbesondere ein nahezu geschlossenes Querschnittsprofil aufweisen kann, wie es ansonsten mit anderen Herstellungsverfahren nur sehr aufwändig zu fertigen wäre. Ein Gleiter des Steuerteils ist in dem Rollprofil verschiebbar aufgenommen, mittels eines durch den Längsschlitz greifenden Lagerbauteils mit dem Steuerteil verbunden und zwischen den Umbiegungen und einer gegenüberliegenden Wand des Rollprofils in Querrichtung oder Y-Richtung insbesondere spielfrei geführt.

In bevorzugter Gestaltung ist das Rollprofil in seinem Oberabschnitt, insbesondere in der Wand, mittels zumindest eines Befestigungselements am Deckel oder an einem Deckelträger festlegbar. Zweckmäßigerweise enthält der Gleiter für dieses in das Rollprofil reichende Befestigungselement eine entsprechende Aussparung, so dass eine Kollision vermieden wird.

Wenn die obere Umbiegung gegenüber der unteren Umbiegung von der gegenüberliegenden Wand des Rollprofils weiter beabstandet ist, wird eine insgesamt platzsparende Gestaltung bereitgestellt.

Eine besonders bevorzugte Gestaltung sieht vor, dass der Gleiter im Rollprofil in Y-Richtung und in Z-Richtung spielfrei geführt ist.

Vorzugsweise ist das Rollprofil aus Metall und insbesondere aus Stahl oder aus Aluminium hergestellt.

In bevorzugter Gestaltung ist vorgesehen, dass die Kulisseneinrichtung zumindest ein vorderes Kulissenelement und ein hinteres Kulissenelement aufweist und die zumindest zwei Kulissenelemente fest miteinander verbunden sind. Hierdurch wird ein modularer Aufbau der Kulisseneinrichtung bereitgestellt, wobei das vordere Kulissenelement als Standard- oder Gleichteil für unterschiedliche Anwendungen bzw. Deckel und Dächer venrvendet wird und das hintere Kulissenelement an die jeweiligen Gestaltungen von Deckeln und Dächern angepasst wird. Somit muss nur eines der beiden Elemente einsatzspezifisch vorbereitet werden.

Eine sichere Verbindung zwischen dem vorderen Kulissenelement und dem hinteren Kulissenelement ergibt sich, wenn das vordere Kulissenelement einen Verbindungsabschnitt an der Verbindungsstelle mit dem hinteren Kulissenelement aufweist und der Verbindungsabschnitt das hintere Kulissenelement formschlüssig und insbesondere an drei Umfangsseiten umgreifend hält.

Bevorzugt ist das vordere Kulissenelement mit dem hinteren Kulissenelement mittels zumindest eines Befestigungselements wie z. B. einer Schraube verbunden, das bzw. die in den Innenraum des Rollprofils reicht und an dem bzw. der der Gleiter aufgrund seiner Aussparung vorbei bewegbar ist.

Des weiteren kann vorgesehen sein, dass das vordere Kulissenelement zumindest eine Kulissenbahn für ein Steuerteil des Deckels aufweist.

Nachfolgend wird die Erfindung anhand eines Ausführungsbeispiels der Kulisseneinrichtung unter Bezugnahme auf die Zeichnung näher erläutert. Es zeigt:
- Fig. 1: in einer Seitenansicht in schematischer Darstellung ein öffnungsfähiges Fahrzeugdach mit einem Deckel, der in einer Dachöffnung mit angehobenem Hinterrand in einer Lüftungsstellung angeordnet ist;
- Fig. 2: in einer Seitenansicht gemäß Fig. 1 das Fahrzeugdach mit dem in eine Öffnungsstellung über dem Fahrzeugdach nach hinten verschobenen Deckel;
- Fig. 3: in einer perspektivischen Draufsicht das Fahrzeugdach in einer Öffnungsstellung gemäß Fg. 2;
- Fig. 4: in einer perspektivischen Draufsicht eine vordere Antriebsmechanik mit einem Koppelhebel zwischen einem einen Deckelträger bildenden vorderen Kulissenelement und einem Antriebsschlitten;
- Fig. 5: in einer weiteren perspektivischen Draufsicht das vordere Kulisseelement und ein hinteres Kulissenelement mit der Antriebsmechanik auf der Dachöffnungsseite;
- Fig. 6: in einer weiteren perspektivischen Draufsicht das vordere und das hinteren Kulissenelement in einer Stellung gemäß Fig. 5 von der der Dachöffnungsseite gegenüberliegenden Seite;
- Fig. 7: in einer Seitenansicht die vordere Antriebsmechanik bei geschlossenem Deckel;
- Fig. 8: in einer Seitenansicht die vordere Antriebsmechanik des in seine Lüftungsstellung verschwenkten Deckels;
- Fig. 9: in einer Seitenansicht die vordere Antriebsmechanik des in einer Übergangsstellung angeordneten Deckels;
- Fig. 10: in einer Seitenansicht die vordere Antriebsmechanik des in seiner Offenstellung angeordneten Deckels;

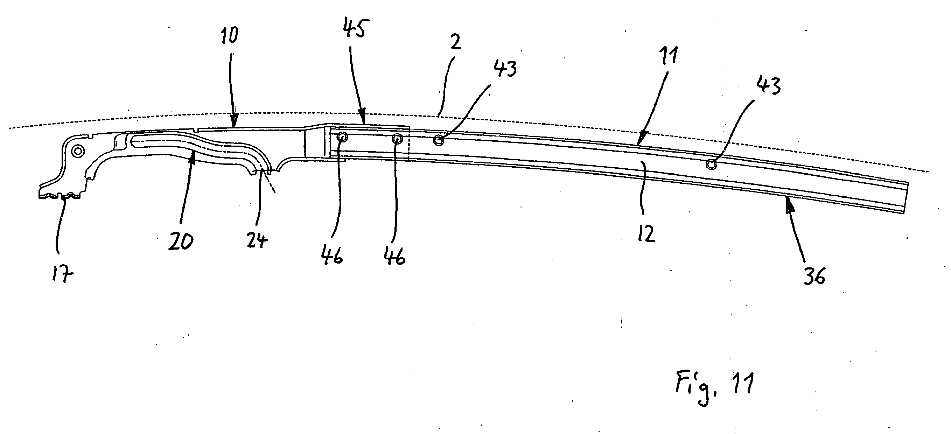

- Fig. 11: in einer Seitenansicht die das vordere und das hintere Kulissenelement enthaltende Kulisseneinrichtung;
- Fig. 12: in einer Querschnittansicht eine Verbindungsstelle des vordere und des hintere Kulissenelements; und
- Fig. 13: in einer Querschnittansicht ein die Kulissenbahn des hinteren Kulissenelements bildendes Rollprofil.

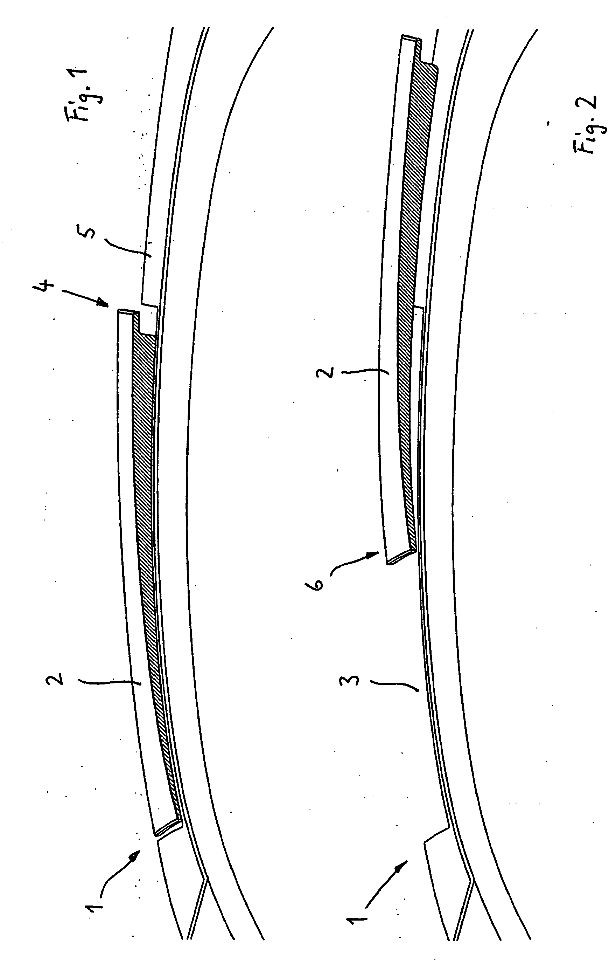

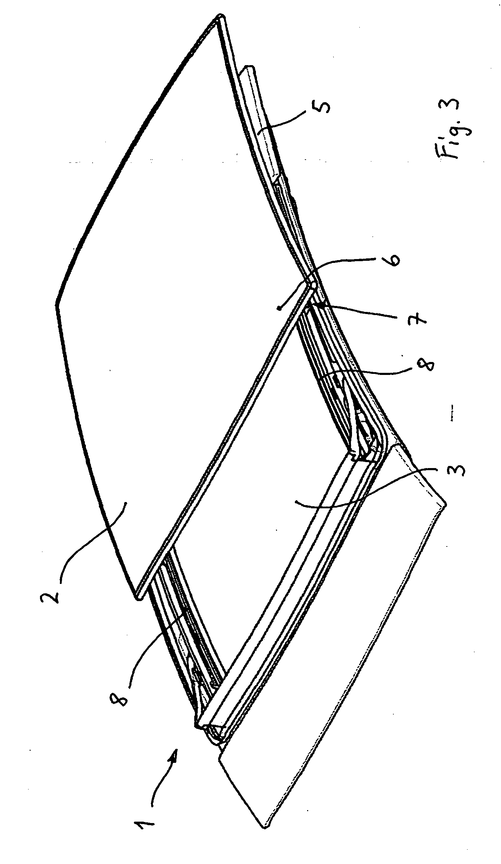

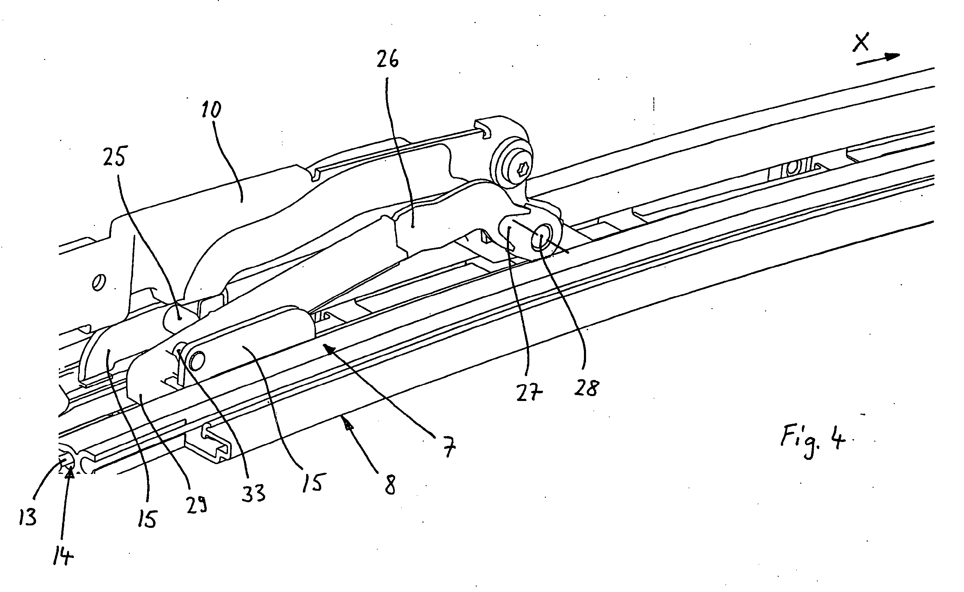

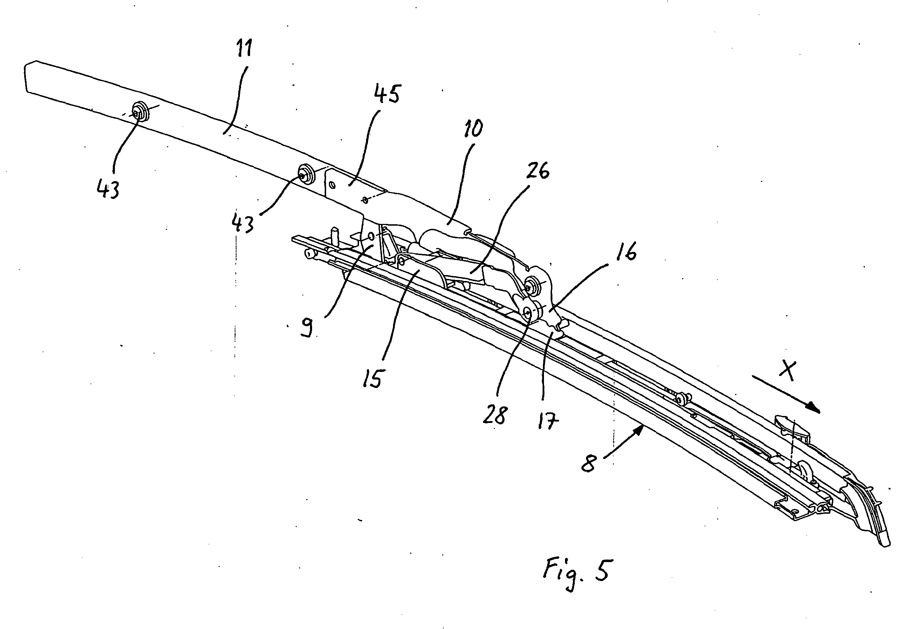

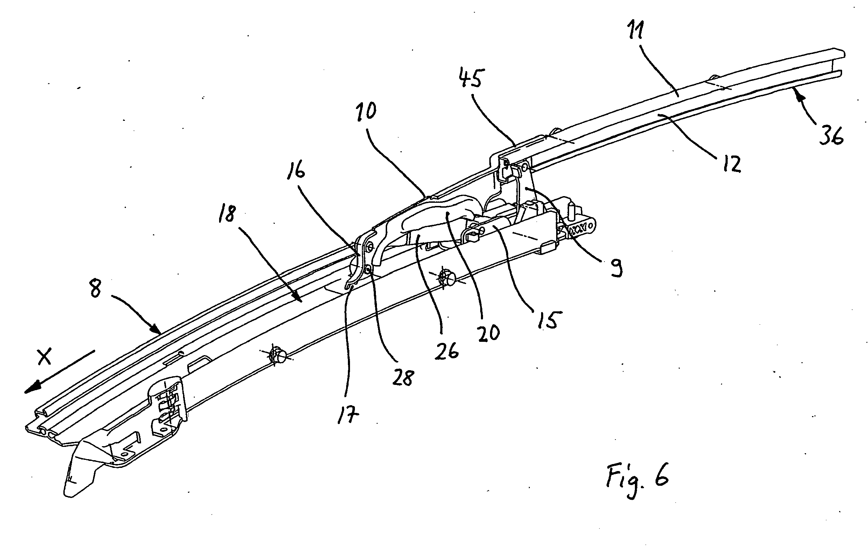

Ein öffnungsfähiges Fahrzeugdach 1 weist einen Deckel 2 auf, der aus einer Schließstellung in einer Dachöffnung 3 in eine Lüftungsstellung (siehe Fig. 1) verstellbar ist, in der sein Hinterrand 4 über eine sich hinter der Dachöffnung 3 anschließende Dachhaut 5 angehoben ist. Das Öffnen des Daches 1 erfolgt, indem der Deckel 2 aus der Lüftungsstellung z. B. noch weiter angehoben wird und nach hinten über die Dachhaut 5, die grundsätzlich von einem festen Dach oder auch von einem bewegbaren Dachteil gebildet sein kann, in eine Spoilerstellung (siehe Fig. 2 und 3) verfahren wird. Der Deckel 2 ist beidseits der Dachöffnung 3 jeweils über eine unter seinem Vorderbereich 6 angeordnete Antriebsmechanik 7 (siehe z. B. Fig. 4 bis 6, der Pfeil X weist am Fahrzeugdach nach vorne in Fahrtrichtung) entlang einer seitlichen Längsführung wie z. B. einer Führungsschiene 8 bewegbar und über einen hinteren Ausstellhebel 9 (siehe Fig. 5 und 6) in seine Spoilerstellung ausschwenkbar. Unterhalb des Deckels 2 ist beidseits jeweils eine Kulisseneinrichtung angeordnet, die eine vordere Deckelkulisse oder vorderes Kulissenelement 10 und eine damit verbundene hintere Deckelkulisse bzw. ein hinteres Kulissenelement 11 aufweist. Der Ausstellhebel 9 gleitet beim rückwärtigen Verschieben des Deckels 2 in einer Kulissenbahn 12 des hinteren Kulissenelements 11. Ein solches Spoilerdach mit einem rückwärtigen Ausstellhebel ist grundsätzlich z. B. in der DE 10 2006 045 632 B3 beschrieben.

Von einem am Fahrzeugdach 1 hinter der Dachöffnung 3 angeordneten Antriebsmotor (nicht dargestellt) verläuft jeweils ein Antriebskabel 13 (siehe Fig. 4) zu der zugeordneten der beiden seitlichen Führungsschienen 8, an der es in einem Kabelkanal 14 bis zu einem Antriebsschlitten 15 geführt ist, mit dem es fest verbunden ist. Der an der Führungsschiene 8 längs verschiebbar geführte Antriebsschlitten 15 ist ein Bauteil der vorderen Antriebsmechanik 7 des Deckels 2.

Das einen Deckelträger darstellende vordere Kulissenelement 10 ist an der Unterseite des Deckels 2 in seinem Vorderabschnitt fest angebracht und erstreckt sich vom Deckel 2 senkrecht abwärts. An seinem vom Deckel 2 nach unten abstehenden Vorderende 16 enthält das vordere Kulissenelement 10 einen Gleiter 17, der in einer Führungsbahn 18 der Führungsschiene 8 verschiebbar geführt ist und in Schließstellung des Deckels 2 in einem nach vorne hin abfallenden Vorderabschnitt 19 der Führungsbahn 18 aufgenommen ist.

Das vordere Kulissenelement 10 weist eine Führungskulisse oder Kulissenbahn 20 auf, die von ihrem vorderen Ende 21, das nahe am Deckel 2 angeordnet ist, nach hinten verläuft und in einem ersten Abschnitt 22 im wesentlichen parallel zum Deckel 2 und anschließend zumindest abschnittsweise leicht abwärts verläuft und in einem zweiten Abschnitt oder Endabschnitt 23 schräg nach unten gekrümmt verläuft, bis sie in einer Austrittsöffnung 24 endet, durch die ein in der Kulissenbahn 20 geführter Steuerbolzen 25 ein- und austreten kann. Der Steuerbolzen 25 ist an dem Antriebsschlitten 15 angeordnet und steht seitlich zum Gleiteingriff an der Kulissenbahn 20 hervor.

Ein Koppelhebel 26 weist ein abwärts gekröpftes Vorderende 27 auf, an dem er an dem vorderen Kulissenelement 10 in einer Drehachse 28 schwenkbar angelenkt ist, die z. B. nahe oberhalb des Gleiters 17 angeordnet ist. Der Koppelhebel 26 weist an seinem Hinterende ein Gleitelement 29 auf, das an der Führungsschiene 8 in der Führungsbahn 18 oder einer anderen Führungsbahn geführt ist, wenn der Koppelhebel 26 mit seinem Hinterende herabgeschwenkt ist und mit einer Ausnehmung 30 an einem Rastabschnitt 31 des Antriebsschlittens 15 in Längsrichtung relativ zum Antriebsschlitten 15 festgelegt ist, so dass er gemeinsam mit dem Antriebsschlitten 15 entlang der Führungsbahn 18 verschiebbar verbunden ist.

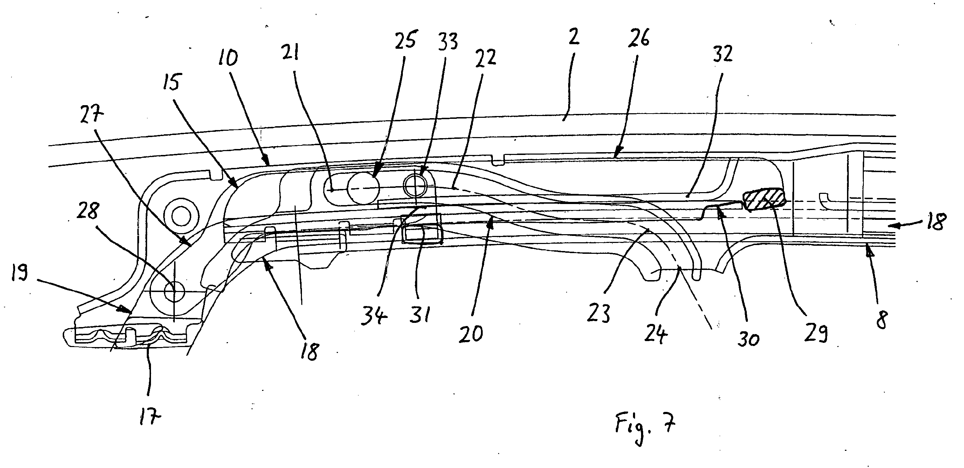

Bei geschlossenem Fahrzeugdach 1 bzw. Deckel 2 (siehe Fig. 7) ist der Antriebsschlitten 15 in einer vorderen Stellung und sein Steuerbolzen 25 befindet sich nahe dem vorderen Ende 21 der Kulissenbahn 20. Das vordere Kulissenelement 10 ist abgesenkt und sein Gleiter 17 befindet sich im Vorderabschnitt 19 der Führungsbahn 18 in einer unteren Position. Der Koppelhebel 26 weist seitlich einen längs verlaufenden Steg 32 auf, der zwischen einem gegen den Steg 32 vorstehenden Stift 33 des Antriebsschlittens 15 und einer Auflage 34 des Antriebsschlittens 15 gehalten ist. In der Schließstellung des Deckels 2 ist der Koppelhebel 26 in einer oberen funktionslosen Ruhestellung gehalten.

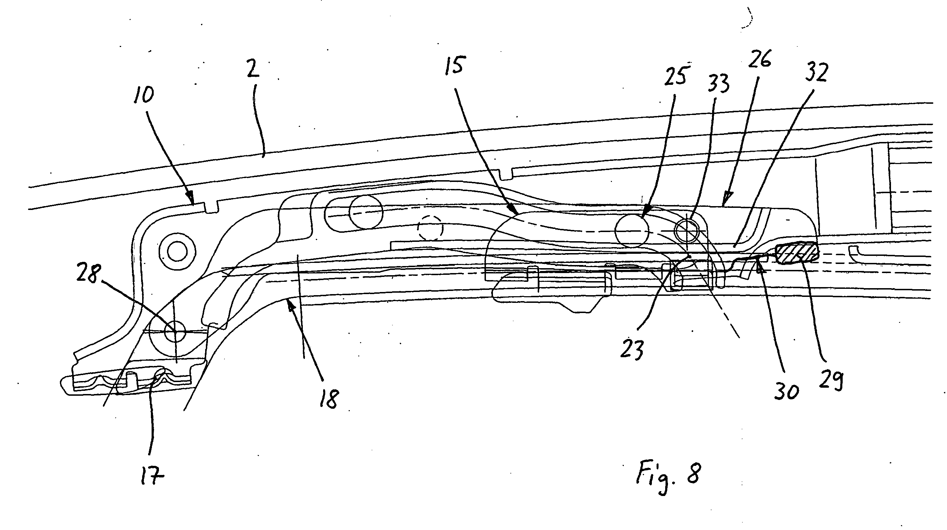

Zum Verstellen des Deckels 2 aus seiner Schließstellung in seine Lüftungsstellung zieht das Antriebskabel 13 den Antriebsschlitten 15 an der Führungsschiene 8 nach hinten. Während dieser Bewegung gleitet der Steuerbolzen 25 in der Kulissenbahn 20 nach hinten in die in Fig. 8 dargestellte Zwischenstellung, in der der Deckel 2 über das vordere Kulissenelement 10 in seine Lüftungsstellung angehoben und mit seinem Hinterrand 4 ausgeschwenkt ist. Der Stift 33 hat sich gegen das hintere Ende des Stegs 32 bewegt und führt den Koppelhebel 26 weiterhin am Antriebsschlitten 15.

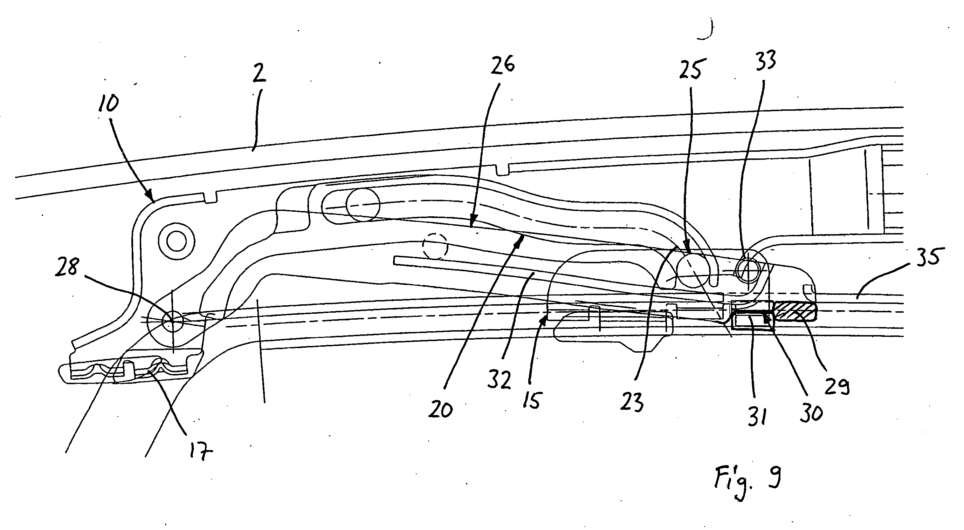

Bei der weiteren rückwärts gerichteten Bewegung des Antriebsschlittens 15 (von der Stellung der Fig. 8 in die Stellung der Fig. 9, die als Übergabestellung bezeichnet werden kann) gleitet der Steuerbolzen 25 im gebogenen Endabschnitt 23 der Kulissenbahn 20 abwärts bis vor die Austrittsöffnung 24. Dabei schwenkt der Steuerbolzen 25 das vordere Kulissenelement 10 um den Gleiter 17 nach oben und zieht gleichzeitig das vordere Kulissenelement 10 nach hinten, so dass der Gleiter 17 in dem Vorderabschnitt 19 der Führungsbahn 18 angehoben wird. Somit wird der Deckel 2 sowohl angehoben wie auch verschwenkt. Des weiteren ist der Koppelhebel 26, der an seinem Vorderende 27 von dem sich hebenden vorderen Kulissenelement 10 ebenfalls angehoben wird, durch die Führung des Stiftes 33 an seinem Hinterende abgesenkt worden und sein hinteres Gleitelement 29 wird unter einen Führungssteg 35 der Führungsbahn 18 eingeschoben, so dass eine vertikale Hubbewegung des Hinterendes des Koppelhebels 26 ausgeschlossen ist. Gleichzeitig wird die Ausnehmung 30 an dem Rastabschnitt 31 des Antriebsschlittens 15 festgelegt, so dass der Antriebsschlitten 15 über dem Koppelhebel 26 mit dem vorderen Kulissenelement 10 und damit mit dem Deckel 2 starr gekoppelt ist.

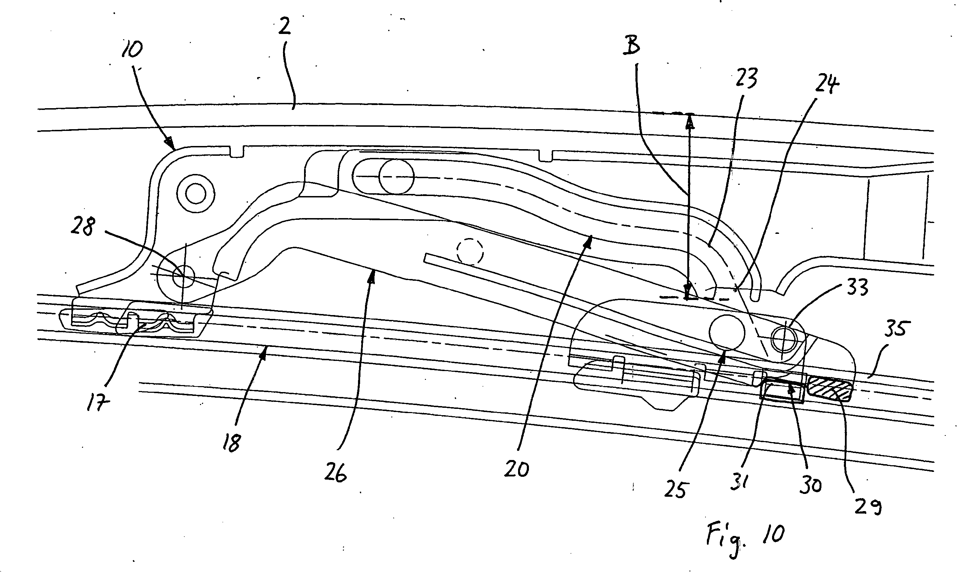

Schließlich zieht der weiter rückwärts bewegte Antriebsschlitten 15 (von der Stellung der Fig. 9 in die Stellung der Fig. 10) über den Koppelhebel 26 das vordere Kulissenelement 10 nach hinten, das von seinem Gleiter 17 angehoben wird, der im Vorderabschnitt 19 auf das Niveau der eben verlaufenden Führungsbahn 18 ansteigt. Zusätzlich hebt der ausgeschwenkte hintere Ausstellhebel 9 das hintere Kulissenelement 11 an, so dass aufgrund dieser Hubbewegungen die vordere Kulissenbahn 20 an ihrem Endabschnitt 23 relativ zum Steuerbolzen 25 angehoben wird und der Steuerbolzen 25 somit durch die Austrittsöffnung 24 austritt und nun ohne Führungskontakt zu der vorderen Kulissenbahn 20 ist. Die Verstellbewegung wird nun vom Antriebsschlitten 15 ausschließlich über den Koppelhebel auf das vordere Kulissenelement 10 und damit auf den Deckel 2 übertragen, so dass der Steuerbolzen 25 nun funktionslos ist.

Da die Kulissenbahn 20 des vorderen Kulissenelements 10 in ihrem Endabschnitt 23 - im Gegensatz zu bekannten Ausführungen ohne Koppelhebel - nicht mehr die Antriebsbewegung des Antriebsschlittens 15 über den Steuerbolzen 25 übertragen muss, während der Deckel 2 in seine hintere Spoilerstellung verstellt wird (siehe Fig. 5 und 6), kann die Kulissenbahn 20 an ihrem Endabschnitt 23 vertikal auf das dargestellte Maß verkürzt sein, wodurch die maximale Bauhöhe B (siehe Figl 10) vom Unterrand der Kulissenbahn 20 an ihrer Austrittsöffnung 24 bis zur Oberseite des Deckels 2 wesentlich reduziert werden kann.

Das Schließen des Deckels 2 erfolgt in entgegengesetztem Bewegungsablauf.

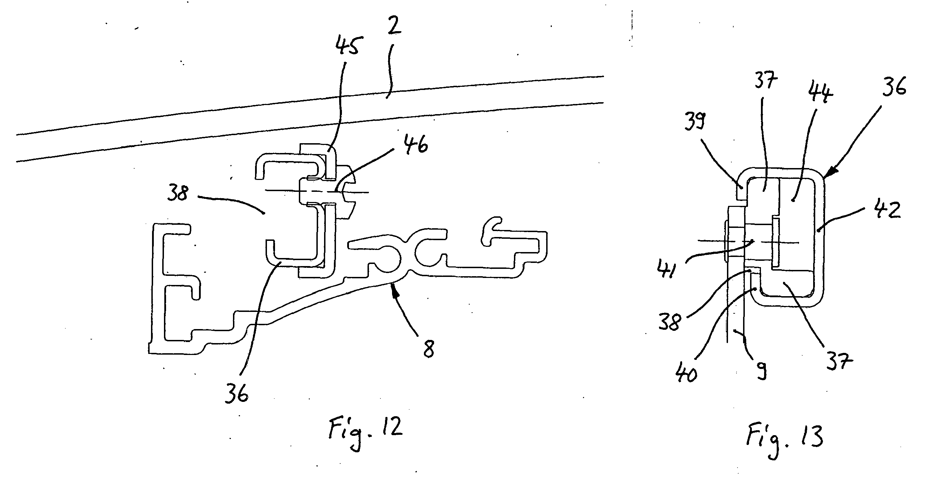

Das hintere Kulissenelement 11 ist oder enthält ein Rollprofil 36, das die Kulissenbahn 12 für einen Gleiter 37 des hinteren Ausstellhebels 9 bildet und insbesondere aus Metall wie z. B. aus Stahl oder aus Aluminium hergestellt ist. Das Rollprofil 36 ist in seiner Längserstreckung an die Länge und Wölbung des Deckels 2 angepasst. Das Rollprofil 36 enthält einen seitlich einseitig offenen Querschnitt (siehe Fig. 13) mit einem Längsschlitz 38 und einer oberen Umbiegung 39 und einer unteren Umbiegung 40 als beidseitige Begrenzungen des Längsschlitzes 38.

Der Gleiter 37 ist an dem Ausstellhebel 9, der auch ein Schlitten oder allgemein ein Steuerteil sein kann, mittels einer Achse 41, die durch den Längsschlitz 38 greift, insbesondere schwenkbar gelagert. Zumindest eine der beiden Umbiegungen 38 und 39 und eine gegenüberliegende Wand 42 des Rollprofils 36 hält den Gleiter 37 in Querrichtung oder Y-Richtung im wesentlichen spielfrei geführt. Ebenso kann der Gleiter 37 im Rollprofil in Z-Richtung spielfrei geführt sein.

Das Rollprofil 36 ist in seinem Oberabschnitt und insbesondere an seiner Wand 42 mittels mehrerer Befestigungselemente, z. B. Schrauben 43, am Deckel 2 oder an einem Deckelträger festlegbar bzw. fest angebracht. Da die Schrauben 43 in den Innenraum des Rollprofils 36 hineinreichen, weist der Gleiter 37 dementsprechend eine Aussparung 44 an derjenigen Stelle auf, so dass er sich in dem Rollprofil 36 bzw. in der Kulissenbahn 12 frei an den Schrauben 43 vorbeibewegen kann.

Die obere Umbiegung 39 ist gegenüber der unteren Umbiegung 38 von der gegenüberliegenden Wand 42 des Rollprofils 36 weiter beabstandet, so dass der Ausstellhebel 9 an der unteren Umbiegung 38 außenseitig vorbeigeführt werden kann und dabei nicht allzu weit über die obere Umbiegung 39 seitlich hervorsteht.

Ein solches Rollprofil 36 kann mit verschiedenen Radien und Krümmungen einfach hergestellt werden und in beliebigen Längen abgelängt werden.

Das vordere Kulissenelement 10 und das hintere Kulissenelement 11 sind miteinander fest verbunden. Durch diesen modularen Aufbau kann das vordere Kulissenelement 10 in einer Ausführung als Standard- oder Gleichteil gebildet sein und für unterschiedliche Deckel und Einsatzfälle ausgelegt sein, wohingegen das hintere Kulissenelement 11 an die jeweilige Dachwölbung und Dach- oder Deckellänge angepasst werden kann.

Das vordere Kulissenelement 10 weist rückseitig einen Verbindungsabschnitt 45 an der Verbindungsstelle mit dem hinteren Kulissenelement 11 auf, der als Umgriffprofil gebildet ist, das das Rollprofil 36 des hinteren Kulissenelements 11 an drei Umfangsseiten, z. B. der Wand 42 und der Oberseite und der Unterseite des Rollprofils 36 (siehe Fig. 12), umgreift und formschlüssig hält. Ein oder mehrere Befestigungselemente wie Schrauben 46 oder Nieten stellen die feste Verbindung bindung sicher. Die Verbindung kann auch durch Toxen, Taumeln oder Schweiβen erfolgen oder gesichert sein und der Umgriff kann einfacher gestaltet sein.

Die die beiden Kulissenelemente 10 und 11 sichernden Befestigungselemente 46 können gleichfalls in den Innenraum des Rollprofils 36 reichen. Der Gleiter 37 kann sich bei Bedarf aufgrund seiner Aussparung 44 auch an diesen Befestigungselementen 46 vorbei bewegen.

**Bezugszeichenliste**

| | | | |
|---|---|---|---|
| 1 | Fahrzeugdach | 24 | Austrittsöffnung |
| 2 | Deckel | 25 | Steuerbolzen |
| 3 | Dachöffnung | 26 | Koppelhebel |
| 4 | Hinterrand | 27 | Vorderende |
| 5 | Dachhaut | 28 | Drehachse |
| 6 | Vorderbereich | 29 | Gleitelement |
| 7 | Antriebsmechanik | 30 | Ausnehmung |
| 8 | Führungsschiene | 31 | Rastabschnitt |
| 9 | hinterer Ausstellhebel | 32 | Steg |
| 10 | vorderes Kulissenelement | 33 | Stift |
| 11 | hinteres Kulissenelement | 34 | Auflage |
| 12 | Kulissenbahn | 35 | Führungssteg |
| 13 | Antriebskabel | 36 | Rollprofil |
| 14 | Kabelkanal | 37 | Gleiter |
| 15 | Antriebsschlitten | 38 | Längsschlitz |
| 16 | Vorderende | 39 | obere Umbiegung |
| 17 | Gleiter | 40 | untere Umbiegung |
| 18 | Führungsbahn | 41 | Achse |
| 19 | Vorderabschnitt | 42 | Wand |
| 20 | Kulissenbahn | 43 | Schraube |
| 21 | vorderes Ende | 44 | Aussparung |
| 22 | erster Abschnitt | 45 | Verbindungsabschnitt |
| 23 | Endabschnitt | 46 | Schraube |

## Patentansprüche

1. Kulisseneinrichtung eines verstellbaren Deckels (2) eines öffnungsfähigen Fahrzeugdaches (1), die an der Unterseite des Deckels (2) fest anbringbar ist und zumindest eine Kulissenbahn (12) zum Eingriff eines die Stellung des Deckels (2) steuernden Steuerteils (9) aufweist,
wobei zumindest ein die Kulissenbahn (12) enthaltender Abschnitt der Kulisseneinrichtung aus einem Rollprofil (36) gebildet ist und das Rollprofil (36) einen einseitig offenen Querschnitt mit einem Längsschlitz (38) und eine obere Umbiegung (39) und/oder eine untere Umbiegung (40) als Begrenzungen des Längsschlitzes (38) aufweist,
wobei ein Gleiter (37) des Steuerteils (9) in dem Rollprofil (36) verschiebbar aufgenommen ist und mittels eines durch den Längsschlitz (38) greifenden Lagerbauteils (41) mit dem Steuerteil (9) verbunden ist und
der Gleiter (37) zwischen den Umbiegungen (39, 40) und einer gegenüberliegenden Wand (42) des Rollprofils (36) in Querrichtung geführt ist.

2. Kulisseneinrichtung nach Anspruch 1,
**dadurch gekennzeichnet, dass** das Rollprofil (36) in seiner Längserstreckung zumindest einen gekrümmten Abschnitt aufweist.

3. Kulisseneinrichtung nach Anspruch 1 oder 2,
**dadurch gekennzeichnet, dass** der Gleiter (37) in Querrichtung spielfrei geführt ist.

4. Kulisseneinrichtung nach einem der Ansprüche 1 bis 3,
**dadurch gekennzeichnet, dass** das Rollprofil.(36) in seinem Oberabschnitt, insbesondere in der Wand (42), mittels zumindest eines Befestigungselements (43) am Deckel (2) oder an einem Deckelträger festlegbar ist und der Gleiter (37) für dieses in das Rollprofil (36) reichende Befestigungselement (43) eine entsprechende Aussparung (44) aufweist.

5. Kulisseneinrichtung nach einem der Ansprüche 1 bis 4,
**dadurch gekennzeichnet, dass** die obere Umbiegung (39) gegenüber der unteren Umbiegung (40) von der gegenüberliegenden Wand (42) des Rollprofils (36) weiter beabstandet ist.

6. Kulisseneinrichtung nach einem der Ansprüche 1 bis 5,
**dadurch gekennzeichnet, dass** der Gleiter (37) im Rollprofil in Y-Richtung und in Z-Richtung spielfrei geführt ist.

7. Kulisseneinrithtung nach einem der Ansprüche 1 bis 6,
**dadurch gekennzeichnet, dass** das Rollprofil (36) aus Metall und insbesondere aus Stahl oder aus Aluminium hergestellt ist.

8. Kulisseneinrichtung nach einem der Ansprüche 1 bis 7,
**dadurch gekennzeichnet, dass** die Kulisseneinrichtung (10, 11) zumindest ein vorderes Kulissenelement (10) und ein hinteres Kulissenelement (11) aufweist und die zumindest zwei Kulissenelemente (10, 11) fest miteinander verbunden sind.

9. Kulisseneinrichtung nach Anspruch 8,
**dadurch gekennzeichnet, dass** das vordere Kulissenelement (10) einen Verbindungsabschnitt (45) an der Verbindungsstelle mit dem hinteren Kulissenelement (11) aufweist und der Verbindungsabschnitt (45) das hintere Kulissenelement (11) formschlüssig und insbesondere an drei Umfangsseiten umgreifend hält.

10. Kulisseneinrichtung nach Anspruch 8 oder 9,
**dadurch gekennzeichnet, dass** das vordere Kulissenelement (10) mit dem hinteren Kulissenelement (11) mittels zumindest eines Befestigungselements oder einer Schraube (46) verbunden ist, die in den Innenraum des Rollprofils (36) reicht und an der der Gleiter (37) aufgrund seiner Aussparung (44) vorbei bewegbar ist.

11. Kulisseneinrichtung nach einem der Ansprüche 8 bis 10,
**dadurch gekennzeichnet, dass** das vordere Kulissenelement (10) zumindest eine Kulissenbahn (20) für ein Steuerteil (25) des Deckels (2) aufweist.

## Claims

1. Link device of an adjustable cover (2) of an openable vehicle roof (1), which device can be mounted fixedly on the underside of the cover (2) and has at least one link path (12) for the engagement of a control part (9) which controls the position of the cover (2), wherein at least one portion of the link device that contains the link path (12) is formed from a rolled profile (36) and the rolled profile (36) has a cross section which is open on one side with a longitudinal slot (38) and an upper bent-over portion (39) and/or a lower bent-over portion (40) as boundaries of the longitudinal slot (38), wherein a slider (37) of the control part (9) is displaceably accommodated in the rolled profile (36) and is connected to the control part (9) by means of a bearing component (41) engaging through the longitudinal slot (38), and the slider (37) is guided in the transverse direction between the bent-over portions (39, 40) and an opposite wall (42) of the rolled profile (36).

2. Link device according to Claim 1, **characterized in that** the rolled profile (36) has at least one curved portion in its longitudinal extent.

3. Link device according to Claim 1 or 2, **characterized in that** the slider (37) is guided in a play-free manner in the transverse direction.

4. Link device according to one of Claims 1 to 3, **characterized in that** the rolled profile (36) can be fixed in its upper portion, in particular in the wall (42), to the cover (2) or to a cover carrier by means of at least one fastening element (43), and the slider (37) has a corresponding cutout (44) for this fastening element (43) which engages in the rolled profile (36).

5. Link device according to one of Claims 1 to 4, **characterized in that** the upper bent-over portion (39) is spaced further, relative to the lower bent-over portion (40), from the opposite wall (42) of the rolled profile (36).

6. Link device according to one of Claims 1 to 5, **characterized in that** the slider (37) in the rolled profile is guided in a play-free manner in the Y direction and in the Z direction.

7. Link device according to one of Claims 1 to 6, **characterized in that** the rolled profile (36) is produced from metal and in particular from steel or from aluminium.

8. Link device according to one of Claims 1 to 7, **characterized in that** the link device (10, 11) has at least a front link element (10) and a rear link element (11) and the at least two link elements (10, 11) are fixedly connected to one another.

9. Link device according to Claim 8, **characterized in that** the front link element (10) has a connecting portion (45) at the connecting point with the rear link element (11), and the connecting portion (45) holds the rear link element (11) in a form-fitting manner and so as, in particular, to enclose it at three peripheral sides.

10. Link device according to Claim 8 or 9, **characterized in that** the front link element (10) is connected to the rear link element (11) by means of at least one fastening element or a screw (46) which engages in the interior of the rolled profile (36) and past which the slider (37) can be moved owing to its cutout (44).

11. Link device according to one of Claims 8 to 10, **characterized in that** the front link element (10) has at least one link path (20) for a control part (25) of the cover (2).

## Revendications

1. Dispositif à coulisse d'un couvercle réglable (2) d'un toit ouvrant de véhicule (1), lequel dispositif à coulisse peut être monté fixement sur le côté inférieur du couvercle (2) et présente au moins une glissière (12) pour l'engagement d'une partie de commande (9) commandant la position du couvercle (2),
au moins une portion du dispositif à coulisse contenant la glissière (12) étant formée d'un profilé roulé (36) et le profilé roulé (36) présentant une section transversale ouverte d'un côté avec une fente longitudinale (38) et une partie recourbée supérieure (39) et/ou une partie recourbée inférieure (40) servant de limitations pour la fente longitudinale (38),
un coulisseau (37) de la partie de commande (9) étant reçu de manière déplaçable dans le profilé roulé (36) et étant connecté à la partie de commande (9) au moyen d'un composant de palier (41) venant en prise à travers la fente longitudinale (38) et
le coulisseau (37) étant guidé dans la direction transversale entre les parties recourbées (39, 40) et une paroi opposée (42) du profilé roulé (36).

2. Dispositif à coulisse selon la revendication 1, **caractérisé en ce que** le profilé roulé (36) présente au moins une portion courbée dans son étendue longitudinale.

3. Dispositif à coulisse selon la revendication 1 ou 2,
**caractérisé en ce que** le coulisseau (37) est guidé sans jeu dans la direction transversale.

4. Dispositif à coulisse selon l'une quelconque des revendications 1 à 3,
**caractérisé en ce que** le profilé roulé (36), dans sa portion supérieure, en particulier dans la paroi (42), peut être fixé au moyen d'au moins un élément de fixation (43) au couvercle (2) ou à un support de couvercle et le coulisseau (37) présente un évidement correspondant (44) pour cet élément de fixation (43) s'étendant dans le profilé roulé (36).

5. Dispositif à coulisse selon l'une quelconque des revendications 1 à 4,
**caractérisé en ce que** la partie recourbée supérieure (39) est davantage espacée par rapport à la partie recourbée inférieure (40) de la paroi opposée (42) du profilé roulé (36).

6. Dispositif à coulisse selon l'une quelconque des revendications 1 à 5,
**caractérisé en ce que** le coulisseau (37) est guidé sans jeu dans le profilé roulé dans la direction Y et dans la direction Z.

7. Dispositif à coulisse selon l'une quelconque des revendications 1 à 6,
**caractérisé en ce que** le profilé roulé (36) est fabriqué en métal et notamment en acier ou en aluminium.

8. Dispositif à coulisse selon l'une quelconque des revendications 1 à 7,
**caractérisé en ce que** le dispositif à coulisse (10, 11) présente au moins un élément de coulisse avant (10) et un élément de coulisse arrière (11) et les au moins deux éléments de coulisse (10, 11) sont connectés fixement l'un à l'autre.

9. Dispositif à coulisse selon la revendication 8, **caractérisé en ce que** l'élément de coulisse avant (10) présente une portion de connexion (45) au niveau du point de connexion à l'élément de coulisse arrière (11) et la portion de connexion (45) retient l'élément de coulisse arrière (11) en s'engageant avec lui par engagement par correspondance de forme et notamment au niveau de trois côtés périphériques.

10. Dispositif à coulisse selon la revendication 8 ou 9,
**caractérisé en ce que** l'élément de coulisse avant (10) est connecté à l'élément de coulisse arrière (11) au moyen d'au moins un élément de fixation ou d'une vis (46), qui s'étend dans l'espace interne du profilé roulé (36) et devant laquelle le coulisseau (37) peut être déplacé du fait de son évidement (44).

11. Dispositif à coulisse selon l'une quelconque des revendications 8 à 10,
**caractérisé en ce que** l'élément de coulisse avant (10) présente au moins une glissière (20) pour une partie de commande (25) du couvercle (2).
